(19)

Europäisches Patentamt
European Patent Office
Office européen des brevets

(11) **EP 2 774 489 A1**

(12) **EUROPEAN PATENT APPLICATION**

(43) Date of publication:
**10.09.2014  Bulletin 2014/37**

(51) Int Cl.:
**A23K 1/16** [(2006.01)]  **A23K 1/18** [(2006.01)]
**A23L 1/09** [(2006.01)]  **A23L 1/236** [(2006.01)]

(21) Application number: **14157862.5**

(22) Date of filing: **05.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:  **05.03.2013   US 201313785230**

(71) Applicant: **Laboratorio Jaer, S.A.**
**08620 Sant Vicenç dels Horts (Barcelona) (ES)**

(72) Inventors:
• **Milán Mesa, Manuel**
  **08620 Sant Vicenç dels Horts (Barcelona) (ES)**

• **Martí Sanromá, Gabriel**
  **08620 Sant Vicenç dels Horts (Barcelona) (ES)**
• **de Cózar García, Sergio**
  **08620 Sant Vicenç dels Horts (Barcelona) (ES)**

(74) Representative: **Mohammadian, Dario**
**Bardehle Pagenberg**
**Avenida Diagonal 420 1-1**
**08037 Barcelona (ES)**

Remarks:
A request for correction of the description has been filed pursuant to Rule 139 EPC. A decision on the request will be taken during the proceedings before the Examining Division (Guidelines for Examination in the EPO, A-V, 3.).

(54) **Use of xylitol for the improvement of the rate of the body weight growth of weaning pigs**

(57)    The present invention relates to the use of xylitol in the food of weaning pigs for increasing the rate of body weight growth in weaning pigs and adult pigs. Xylitol in a concentration of 0.1 to 4% based on the total weight of the food improves considerably the food intake of weaning pigs and the conversion of the food into body weight.

FIG. 2

EP 2 774 489 A1

**Description**

**Technical Field**

The present invention refers to the use of xylitol to improve the rate of the body weight growth in weaning pigs.

**Background of the Invention**

In intensive farming, food additives in veterinary care are intended substantially to improve the animal production efficiency. Such production efficiency consists in shortening the time span to have the animal reaching in good health certain weight.

Pigs are animals that are extensively used in intensive farming for the production of meat aimed for human consumption. A critical phase in this economically important activity covers the period spanning from the separation of the piglets from the lactating sow until they are fully adapted to the adult food, which period is also known as weaning. Therefore, the separated piglets in this transition period are commonly defined as weaning or weaned pigs. The future development of the pig will depend on the body mass the weaning pig has reached. A healthy higher body weight initializing the next phase shall mean improved development in the adult.

Weaning the piglets from the mother sow is generally done between 21 and 28 days of life of the piglets when they have reached a minimum weight of about 5 kg. During weaning, the piglets are subjected to a transition from the mother's milk to adult food. Some time before starting the weaning, the piglet is offered feed in addition to mother's milk with the aim of favouring the adaption to solid food. This feed is named lactoinitiator and is fed from about the fifth day of life until the day weaning starts. Then the feed is changed to the so-called pre-starter. This pre-starter is fed beginning with the first day of weaning for about 2 to 3 weeks. After 2 to 3 weeks, the starter feed replaces the pre-starter feed and is given to the piglets until they have reached a minimum weight of about 18 kg to 20 kg. At this moment approximately, the transition phase from the mother's milk to adult food ends. After this transition phase, the fattening phase starts where the now adult pigs are fed with special fattening feed until they reach their slaughter weight. Notwithstanding, the above procedure may be applied with slight variations on the discretion of each farmer.

The current feeds for intensive pig farming have special compositions according to the age of the animal. The feed for piglets is thus different from the feed for adult pigs. The feed for piglets has been extensively studied with respect to its specific formulation to obtain the best economic balance which is possible. Yet, there is a certain freedom to add additives thereto with the aim to enhance the farming results.

There are, basically, three types of additives:

- Antibiotic growth promoters: these are antibiotic substances which affect the intestinal flora of pigs. Their effect is based on the reduction of the enteric flora. As the flora competes with the resources which have to be used for fattening, reducing the amount of flora results in a reduction of the pig's energy consumption, so that, more energy is available to be used for the fattening metabolic process.
  The AGP's were introduced in the 1950's as food additives in pigs to human consumption with spectacularly good results. They were banned at the beginning of the 2000's because of the increase of resistances in antibiotic therapies of humans.
- Acidifying agents: these affect the digestibility of the diet, permitting to obtain more energy from the food's components, to digest complex sugars like xylanases and glucanses, and to optimise the biodisponibility of minerals, such as phosphor.
- Flavouring agents: substances that are intended to increase food desirability.

The AGP banning brought a notable reduction in the pig growth economic efficiency and has forced the sector to find new additives to substitute the AGP's. However, despite the important economic interests involved, no additive is yet in use with the universal properties of being functional to pigs while harmless to humans and to the environment.

The economic urge from the sector has led the research path to a wide number of substances suspected, because of human analogies and other reasons, to provide fast healthy weight growth in pigs. But none has yet turned out to be satisfactory, any of them showing some sanitary, or ecologic, or economic drawback and no one equaling the economic results obtained with AGP.

Hence, there is a problem to provide intensive pig farming which is economical, sustainable, animal-friendly and highly effective. In particular, there is the problem that there is no such intensive pig farming available for weaning pigs that allows for a high body growth in short time.

Some methods have been suggested increasing the growth rate by increasing the lipid content in the pig's feed. Lipids, such as fats and oils, provide more energy in kcal than proteins or carbohydrates and, consequently, due to the mere presence of the higher lipid content, a higher body weight may be obtained. For example, fats can provide 2.25 times as much metabolisable energy as most of the cereal grain, and the addition of 1 to 5% fat to growing-finishing swine diets alone will already improve feed conversion. However, high lipid-containing diets have two peculiarities. First, the feed contains high contents of lipids such as 5% by weight or more, which is not usual in pig's diets. Second, such high lipid-containing diets only show effects in male pigs. It has been observed that feed containing high amounts of lipids have the problem that they are not readily digestible and, thus, require an emulsifier as an additive. In some instances, sorbitol has been used as such an emulsifier. Further, diets with high lipid content are problematic in that they are more expensive and the lipids may become rancid at higher temperatures or when the lipid-containing feed is stored too long. Moreover, the problem of intensive pig farming concerning weaning pigs exists now for decades, since no solution has been found to eliminate the refusal of weaning pigs to eat adult pig feed and to facilitate thus the transition thereto from the mother's milk.

Therefore, there is the need for improving intensive pig farming of weaning pigs that overcomes at least one or all of the afore-mentioned problems and disadvantages.

## SUMMARY OF THE INVENTION

The object of the present invention is to overcome one or all of the afore-mentioned problems by using xylitol as an additive of normal feed in intensive pig farming of weaning pigs, in particular due to its effect as a wetting agent. The use of xylitol in intensive pig farming of weaning pigs shows synergistic effects yielding a high body growth in short time, i.e. a high rate of body weight growth. In accordance with one or more embodiments, and corresponding disclosure thereof, various aspects are described in connection with the use of xylitol in the intensive farming of weaning pigs in order to obtain high body growth in short time preserving at the same time good health of the pigs.

One embodiment disclosed herein provides the use of xylitol as wetting agent in the feed for weaning pigs for increasing the rate of body weight growth of weaning pigs and pigs.

Further aspects of the present invention that implement various aspects, embodiments and features are disclosed in the dependent claims.

## DRAWINGS

FIG. 1 shows an overview of the transition period of piglets from weaning to fattening derived from a farm in the period between October 25, 2012 and February 28, 2013.
FIG. 2 shows a graph that illustrates the weight increase of pigs with time comparing the use of plain food and of food containing xylitol.
FIG. 3 is a detailed view taken from the graph of FIG. 2 showing the last days when the pigs reach their slaughter weight.
FIG.4 is a schematic view of a direct growth comparison of pigs between plain food and food containing xyitol.

## DETAILED DESCRIPTION OF THE INVENTION

The reason to focus the attention generally on sugars as feed additives relies in the historically well-known fact that sugars increase the food palatability in humans.

Hence, flavourings developed for human feeding have been used in intensive pig farming as well. However, these flavourings give poor results in pigs. Recent studies such as "Analyses of pig genomes provide insight into porcine demography and evolution" Nature, 491, 393-398 of November 15, 2012 have shown that the perception of sweet is different in pigs with the result that the most powerful sweeteners for humans, like sucralose, aspartame or alitame are not sweet to pigs. Even saccharine , one of the sweeteners accepted to be used in pig feed, is about 5000 times less sweet for pigs than for humans. On the other hand, the mere addition of sweeteners for pigs, such as sucrose, to pig feed does not increase food intake, although it has been proven that pigs choose sweet feed when they have the choice between sweet feed and normal plain feed. However, this does not mean that pigs eat more of the sweet feed, because otherwise it would be sufficient to just sweeten pig feed to obtain high body weight growth.

In other words, in animals in general and so also in the case of pigs, the increase in acceptance does not mean automatically an increase in the food intake. That is because the pig is a voracious species that eats irrespective whether the food is sweet or not, until it feels satiated. According to D. V. Rayner in "Gastrointestinal satiety in animals other than man", Proceedings of the Nutrition society, 51, 1-6 of 1992, satiety is a feeling caused by a tension formed in the stomach wall due to the swelling of the stomach upon eating. Pigs swallow the feed quickly almost without chewing and only when satiated they stop, and when the stomach tension becomes too large, pigs feel satiated and stop eating. When food is digested and the tension is relieved, then pigs start eating again. Therefore, pigs at any age have always food at their disposal.

Considering this satiety mechanism of pigs the conclusion that is to be drawn from preference tests is that in front of two different feed, pigs will always choose the sweetened feed instead of the plain feed. However, there is no higher food intake of sweetened feed than of plain feed only because the feed is sweet.

In the study of Glaser et al. in "Gustatory responses of pigs to various natural and artificial compounds known to be sweet in man" published in Food Chemistry 68 (2000) 375-385, it has been established that pigs prefer water containing 5 g/l of sucrose. However, sucrose, which is permitted as additive in pig fees, is not used, because its preference does not result in any increase of food intake.

In a field test, the food intake in a farm was observed during 3 weeks after weaning in 15 pens with 170 animals each. A first group of 5 pens and 850 animals was fed with plain food. A second group of 5 pens and 850 animals was fed with plain food added with 2.5% by weight sucrose. And a third group of 5 pens and 850 animals was fed with plain food added with 2.5% by weight xylitol. The results in Table 1 below show that the addition of sucrose does not have any effect in the food intake.

Table 1

| | Plain food | | Food containing 0.25% Sucrose | | Food containing 0.25% Xylitol |
|---|---|---|---|---|---|
| Pen | (Monthly intake kg) | Pen | (Monthly intake kg) | Pen | (Monthly intake kg) |
| 1 | 826 | 6 | 835 | 11 | 919 |
| 2 | 867 | 7 | 802 | 12 | 934 |
| 3 | 840 | 8 | 856 | 13 | 922 |
| 4 | 887 | 9 | 819 | 14 | 915 |
| 5 | 803 | 10 | 873 | 15 | 970 |
| Total | 4223 | Total | 4185 | Total | 4660 |

Hence, there is no significant increase in the pig's feeding habits in the presence of sugars, no matter the sugar concentration. Not even with the most preferred sugar sucrose was it possible to obtain any increase of food intake. Hence, sugars in general have the problem that its use as additive does not provide for an intensive pig farming which is economic, sustainable, animal-friendly and effective.

The present inventors now have found that this drawback of sugars and other polyols can be overcome by the addition of xylitol to pig feed. According to Glaser et al., besides sucrose as a powerful sweetener agent in pigs, there is also xylitol rating equally high, assuring good acceptance

Xylitol as additive in normal, standard food for weaning pigs in one embodiment shows a different effect which cannot be obtained with any other sugar or polyol or even any other type of additive. In particular, during the transition phase of separating the piglets from the lactating sow and starting intensive pig farming with adult food. i.e. the starting the fattening phase, only xylitol shows advantageous effects yielding a high body weight growth in short time while preserving at the same time good health of the pigs.

The body weight growth is normally related to the food intake by the animal. In general, an increased food intake will result in a higher body weight growth. Alternatively, it has been shown that diets containing higher amounts of lipids can increase the body weight growth as well due to the higher energy content thereof. Yet, an emulsifier such as sorbitol is required for digesting the high lipid content. However, the advantage of xylitol is that it can be added to any type of feed, irrespective of its lipid content, and will always increase the food intake and, thus, the body weight growth.

It has been found that the use of xylitol increases the food intake in weaning pigs and the rate of body weight growth. Hence, at the end of the normal transition phase of about 50 days the piglets have a body weight which is 1 kg more than that of piglets fed with plain food not containing xylitol. Higher body weight means that the pig will be able to convert the food better into meat. Alternatively, the normal body weight required for starting fattening is reached faster reducing the transition phase by several days. Notwithstanding, the use of xylitol reduces the time necessary to reach the slaughter weight of pigs by about 12 days faster. This means that higher turnover is possible, more pigs can be reared, and less food is required. In fact, it has been observed that about 7 kg less food is required than with plain food, which will save considerably costs and, thus, has an enormous economic impact in the total production costs of the animals.

This xylitol effect is especially noticeable with weaning pigs, where the usual focusing of having pigs eating more has to be substituted for the really important consequence: greater bodyweight growth in a short time.

The observed increased food intake effect is reached due to xylitol's unique characteristics among the polyalcohols. Pigs prefer xylitol over any other polyalcohol or sweetener known in humans, and xylitol acts as a wetting agent in the stomach of pigs. Pigs start eating quickly due to the high preference effect of the xylitol. Once the feed is in the stomach, xylitol modifies the feed viscosity and permeability. Water and gastric juices penetrate better in the solid food particles, which consequently are dispensed in a shorter time to the intestines, that is, emptying the stomach in a shorter time and so reducing the food pressure on the stomach wall and hence eliminating the satiety feeling. Then the stomach is ready to be filled again.

With xylitol as additive in the food the satiety feeling in weaning pigs exists during shorter time than if no wetting effect was present in the stomach and, given the mentioned voracious nature of this species, longer time spans without satiety feeling shall lead to longer time periods eating, that is, to an increase in the food intake that will produce the desired higher rate of body weight increase.

So the increasing intake is explained by the xilitol's wetting capacity, and not by a pig's preference towards xylitol. The xylitol's preference effect in pigs would be shown in case of administering the animals with two different feed: a plain feed, and a feed added with xylitol. In this case the pigs always would choose the feed added with xylitol. The reason is that an increase of food palatability does not exert any effect on the weaning pig's food intake because irrespective of whether the feed is sweetened or not, the weaning pig shall eat until satiety stops it as has been explained before. Being the factor to condition the food intake the time span during which the satiety feeling prevails, the sweetening effect of sugars alone shall not lead to any remarkable change in the voracious food intake in the pig.

The increase of food intake is an extremely difficult matter, and represents an unresolved problem for all feed formulators for a long time now. In modern pig production, the main restriction to get the maximum performance from the current genetic lines is the food intake amount. In other words, pigs do not eat enough. Their digestive system size has not been increased at the same level than its ability to form muscular tissues. Hence, food formulators are required to look for the biggest energetic density in pig diets, affecting significantly the expenses for pig feed. About 60 to 70% of the total cost of meat production is necessary only for the pig feed.

The use of xylitol according to the present invention has now resolved this problem. The results obtained by the use of xylitol have not been obtained with any other substance. The use of xylitol increases the food intake of pigs and, consequently, their body weight growth. The use of xylitol also enhances the metabolization of the food and, thus, its transformation into meat. This is not achieved with any other sugar or polyol. The body weight increase in weaning pigs fed with food containing sugars or polyols other than xylitol was not substantively different from the body weight increase in the case of similar weaning pigs fed with plain food. The xylitol-containing food of the present invention may be selected from the group comprising lactoinitiator, pre-starter, starter, water or combinations thereof.

Neither alternative food additives such as other emulsifier, sweeteners or flavour enhancers such as amino acids can show the results in weaning pigs which are obtained by the use of xylitol.

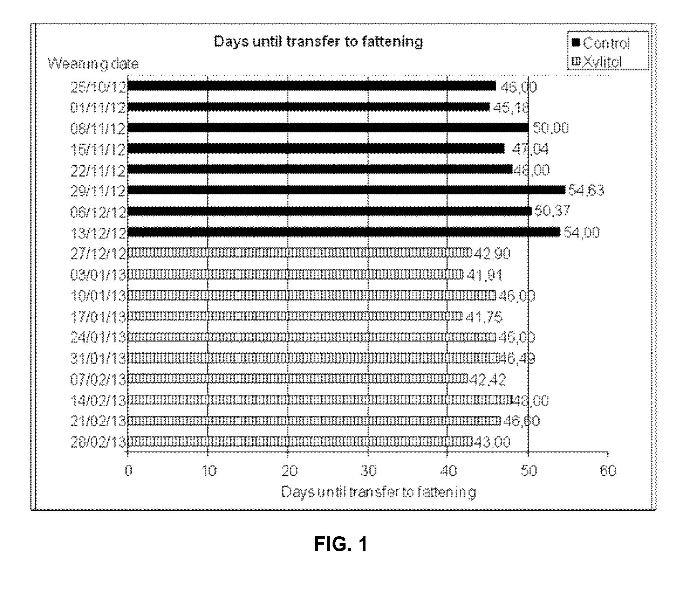

FIG. 1 shows the results from comparison field tests demonstrating that the use of xylitol in the feed for weaning pigs is increasing the rate of body weight growth. In the field tests of FIG. 1, the feeding of weaning pigs in the transition phase was carried out using plain food on the one hand and food to which xylitol had been added in an amount of 0.265 % on the other hand. The feeding with plain food had been carried out from October 25, 2012 to December 13, 2012 and the results thereof are indicated by the filled black bars, whereas the feeding with xylitol-containing food had been carried out from December 27, 2012 to February 28, 2013 and the results thereof are indicated by the bars with cross-lines.

In said field test, piglets were weaned from the mother sow when they reached a body weight of about 5.6 kg corresponding to an age of about 25 to about 28 days. Feeding during weaning, i.e. during the transition from mother's milk to fattening, was then carried out with plain food until the piglets reached a body weight of about 18.6 kg corresponding to an age of about 75 days. That is, the transition phase in this field test was about 50 days long. However, when xylitol was added to the food administered in the transition phase, the piglets reached the body weight of about 18.6 kg faster, in only about 44 days. That is, the rate of increase in body weight has been clearly improved by adding xylitol by about 6 to 7% with the result that the piglets are transferred earlier to the fattening process. Hence, more piglets may be raised per year producing a higher turnover.

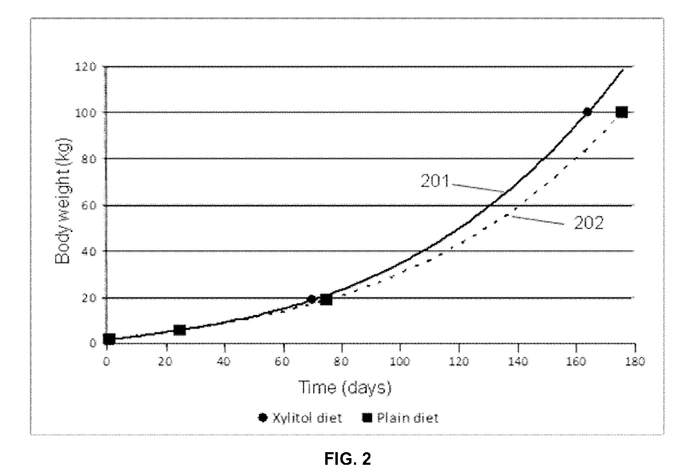

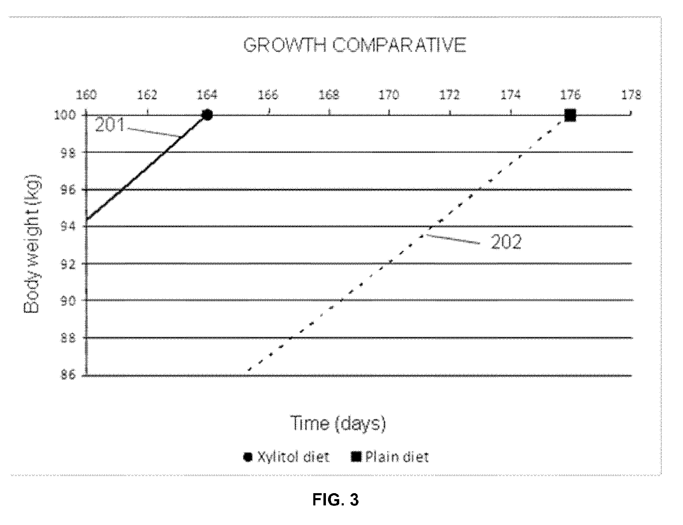

Surprisingly, the above-described effect of the xylitol-containing food administered during the transition phase continues until the pigs reach the slaughter weight of about 100 kg, even if the feed during fattening does not contain any xylitol. FIG. 2 shows the body weight increase with time, starting from birth until a slaughter weight of 100 kg has been reached. The continuous line 201 with -●- shows the body weight growth increase using xylitol-containing food, whereas the dotted line 202 with - ■- shows the weight growth increase using plain food. FIG. 3 is a detailed view of FIG. 2 focusing on the last days before reaching said slaughter weight. Pigs which were fed with xylitol-containing food during their transition from mother's milk to adult feed required only about 164 days to reach 100 kg, whereas pigs which had been fed with plain food during their whole life needed about 12 days more, i.e. a total of about 176 days, to reach 100 kg. Hence, the effect of xylitol becomes even more pronounced during the fattening phase and the overall rate of body weight growth is increased by about 7%. It is to be noted that after entering the fattening phase, the pigs were fed with plain food only and no more xylitol was added to the food.

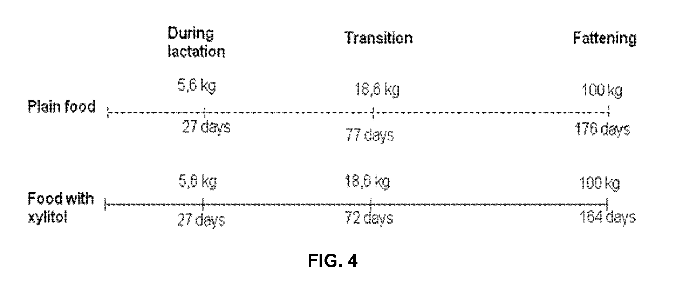

FIG. 4 is a schematic view of the growth comparison of pigs fed with either plain food or food containing xylitol, which shows the body weight growth in a more simplified manner. As has been mentioned before, at a body weight of about 5,6 kg, the transition phase starts and lasts until the piglets reach about 20kg. Then, the pigs are fattened until they reach the slaughter weight of about 100 kg. Use of xylitol during the transition phase leads to a savings in time of 5 days after transition and 12 days after fattening. It has been observed that the total food consumed during rearing when xylitol-containing food during the transition phase has been used was reduced by about 7 kg compared to a diet with conventional food. Taking into account that the food makes up of about 70% of the total costs of the rearing of pigs, this reduction in feed of 7 kg represents an important cost savings.

Hence, the use of xylitol in the feed for weaning pigs increases their rate of body weight growth and reduces the required time for the transition phase as well as for the fattening phase with respect to conventional pig farming. That is, the overall time for pig farming can be reduced by using xylitol in the feed for weaning pigs, which means that considerable costs savings may be obtained due to shortened transition and fattening phases, higher turnover in pig farming, reduced amount of food required for reaching the slaughter weight.

In fact, it has been observed that the above-described improvement of the body weight increase rate can only be obtained when xylitol is administered to the weaning piglets during the transition phase. Additional administration of xylitol during the fattening phase does not further improve the body weight increase rate. Administration of xylitol only during the fattening phase does not improve the body weight increase rate, either.

Hence, xylitol in one embodiment shows the highest effects of a high bodyweight growth in the time of transition from mother's milk to adult food. It is in this life span of the piglets where it is most needed in intensive pig farming, so that the transition phase from mother's milk to adult food yields healthy piglets having a high bodyweight.

As has been mentioned before, xylitol enjoys an extremely sweetness potency in pigs, as it was established by Glaser et al. in their work "Gustatory responses of pigs to various natural and artificial compounds known to be sweet in man" published in Food Chemistry 68 (2000) 375-385.

As a consequence, xylitol is the only compound that meets both necessary criteria to produce, as additive, a greater body weight increase in weaning pigs during their feeding period, which is about three weeks: Xylitol reduces fastly satiety and additionally makes food attractive (palatable). No other known sugar alcohol or sweetener combines alone these two features.

Adequate veterinary inspection of the animals involved with the xylitol-containing food showed that the animals were extensively healthy. Therefore, the use of xylitol is animal-friendly and provides for a sustainable intensive pig farming.

Besides promoting simultaneously healthy and faster increase in the weaning pig's body weight, xylitol combines also the following two zootechnical convenient characteristics: It is harmless to humans consuming the meat from pigs fed with xylitol-containing food and innocuous to the environment.

Therefore, xylitol's combined features result in a valuable economic effect to be exploited in the intensive pig farming, in particular in pig farming of weaning pigs. Besides, the intensive pig farming is also sustainable, animal-friendly and very effective.

Hence, in one preferred embodiment, Xylitol used in food for intensive pig farming of weaning pigs may be employed during a piglet phase corresponding to the period from the moment they may be fed with additional food apart from mother's milk until the start of adulthood.

Xylitol may be used during this piglet phase ranging from 5 days of life up to about 84 days of life. Xylitol is preferably be used from about 20 days of life up to about 84 days of life, more preferably from about 20 days of life up to about 78 days of life and more preferred from about 20 days of life up to about 72 days of life. In another preferred embodiment, xylitol is preferably used from about 5 days of life up to about 68 days of life, more preferably from about 20 days of life up to about 68 days of life, still more preferred from about 20 days of life up to about 65 days of life.

Notwithstanding, the weaning of piglets may start at any moment between an age of 20 to 28 days depending on the actual weight the piglets can reach in their first days of life. Therefore, xylitol is used preferably during the whole transition phase of weaning pigs from the mother's milk to adult food.

One advantage of the use of xylitol in food of weaning pigs is that the transition phase of weaning pigs is shortened with respect to the normal transition phase using plain food only. Preferably, the transition phase is shortened by at least 2%, more preferably by at least 3%, still more preferably by at least 4%, still more preferably by at least 5%, still more preferably by at least 7%, and most preferably by at least 8 to 12 %.

A second advantage of the use of xylitol in the food of weaning pigs is that the rate of body weight growth of weaning pigs and/or adult pigs during the transition and the fattening phase is increased with respect to the normal body weight growth using plain food only. Preferably, the rate of body weight growth of weaning pigs and/or adult pigs is increased by at least 3%, preferable by at least 5%, more preferable by at least 6%, still more preferably by more than 6%, and still more preferably by at least 7% or more.

The amounts of xylitol to be used ranges from 0.01 to 4% by weight based on the total weight of feed, for example 0.1 to 4% by weight based on the total weight of feed. When more than 4% by weight based on the total weight of feed are used, the use of xylitol as wetting agent becomes expensive without further improving the wetting effect. Specific amounts showing optimal results are between 0.1 to 1% by weight, more preferably from 0.25 to 0.35% by weight based on the total weight of feed.

Other additives that can be added together with xylitol include without limitation artificial sweeteners such as saccharine, neohesperidin dihydrochalcone, acesulfame, alitame or aspartame; natural sweeteners or their corresponding synthetic ones such as benzylphenylacetate, ethylcinnamate; natural flavourings and essential oils such as the ones from Juniperus communis, Lavandula latifolia; dyes; carotenoids and xanthophylls such as canthaxanthine; anticaking agents such as colloidal silica or kieselguhr; emulsifiers such as lecithin, polyoxyethylene sorbitan 20; thickening agents or jelling agents such as xanthane gum, guar gum; preserving agents such as potassium diformiate; acidifiers such as citric acid, benzoic acid; enzymes such as alpha amylase, beta glucanase or 3-phytase, and preparations thereof; vitamins and provitamins such as riboflavin, nicotinic acid; substances having effects similar to vitamins such as taurine or carnitine; oligoelements such as iron, cobalt or copper; chelates such as zinc methionine chelate; amino acids, salts and analogues thereof, such as lysine, hydroxyl analogue of methionine, monohydrochloride of L-lysine; urea and its derivatives; digestion enhancers such as 3-phytase, or preparations of 1,4-beta xylanase; stabilizers of the intestinal flora such as Bacillus cereus or Sacharomyces cerevisiae; and combinations thereof. These additives can be used with xylitol in such amounts that cause a synergistic effect.

As mentioned herein, the term "piglets" refers to young pigs until they enter the fattening phase and become "adult pigs". As mentioned herein, the term "weaning pigs" or "weaned pigs" refers in general to piglets of an age of 5 to 84 days, more particularly to piglets of an age of 20 to 84 days. Since the age may vary depending on the individual conditions on each farm, the term "weaning pigs" or "weaned pigs" alternatively refers in general to piglets fed with either, lactoinitiator, pre-starter, or starter feed until they reach a body weight of about 18 to about 20 kg, more particularly to piglets having a body weight from about 5 to about 20 kg. As mentioned herein, the term "transition" or "transition phase" refers to the period in which the piglets are separated from the mother sow and adapted to adult food until they reach a body weight of about 18 to about 20 kg. The transition phase may include the period when the piglets are fed with lactoinitiator before their separation from the mother sow. As mentioned herein, the term "fattening" refers to the phase in which adult pigs having a body of about 18 kg to about 100 kg are fattened with a fattening feed until they reach the slaughter weight.

## EXAMPLES

Xylitol contents in the range of 0.01 to 4% by weight based on the total weight of the food improve the rate in the body weight growth of weaning pigs as they reduce the time of permanence of the food in the stomach helping the weaning pig to resume its voracious activities shortly after feeding. In the following, exemplary feedstuff for weaning pigs containing xylitol as additive is described.

**Example 1**

3.5 kilograms of xylitol are added to the ingredients of one metric ton of pre-starter food as it is prepared in the factory. The ready mixture can be served to weaning pigs.

**Example 2**

3.5 kilograms of xylitol are dissolved in 1000 liters of drinking water aimed to the weaning pigs.

**Example 3**

2.6 kilograms of xylitol are added to the ingredients of one metric ton of pre-starter food as it is prepared in the factory. The ready mixture can be served to weaning pigs.

**Reference Example 1**

A field test was carried out on a farm, which results are illustrated in FIG. 1. Born piglets were with her mother until they reached a body weight of about 5.6 kg. The piglets had then an age of about 25 to 28 days. Upon reaching said body weight, the piglets were fed with plain pre-starter food until they reached a body weight of about 18.6 kg at an age of about 75 days. Hence, the piglets were about 50 days in the transition phase from weaning to fattening. Intensive pig farming continued with plain fattening food until the pigs reached a slaughter weight of about 100 kg at an age of about 176 days (cf. FIGs. 2 and 3).

**Example 4**

The field test of reference example 3 was repeated with pre-starter food containing 2.65 kg/ton of xylitol. The results thereof are also illustrated in FIG. 1. The piglets remained about 45 days in the transition phase, meaning that this phase was reduced by 5 days. Intensive pig farming then continued with plain fattening food until the pigs reached a slaughter weight of about 100 kg at an age of about 164 days (cf. FIGs. 2 and 3). Hence, the pigs reached their slaughter weight 12 before the pigs of reference example 1 did. Moreover, the totally consumed food in this example 3 was reduced by 7 kg/animal with respect to the totally consumed food of reference example 1.

**Example 5**

The pigs of reference example 1 and example 4 were further observed during fattening with respect to the food intake and the body weight growth. From the data obtained, the food conversion index was calculated. Said food conversion index is an indication for the efficiency of an animal to transform the food into meat.
The conversion index is the amount of food which is required to produce 1 kg of pig's meat. This index is important because about 70% of the costs in intensive pig farming is spend on thefeeding. The conversion index is calculated as follows:

$$\text{Conversion Index = Food Intake (kg) / Bodyweight Gain (kg)}$$

The following results have been obtained from the pigs of reference example 1 and of example 4:

Table 2

|  | No. of animals | Total weight in kg when starting fattening | Total weight in kg when finishing fattening | Food intake in kg | Conversion index |
|---|---|---|---|---|---|
| Reference example 1 | 1168 | 21724,8 | 115100 | 259935 | 2.73 |
| Example 3 | 1151 | 21408,6 | 116800 | 248188 | 2.65 |

As can be seen from Table 2, the use of xylitol for weaning pigs affects the rate of body weight growth not only during the transition phase but also in the subsequent fattening phase where the fattening feed does not contain any xylitol. Piglets which have been fed with xylitol-containing food during weaning are capable to transform the food more efficiently into meat in both the transition and the fattening phase than piglets which were fed with plain food during weaning. Hence, the use of xylitol in weaning pigs increases the rate of body weight growth and reduces the time required for reaching the slaughter weight.

**Comparative Example 1**

Comparative example 1 is a field test, in which sorbitol, lactose and glucose were used as additives in pig feed, with nine homogeneous pig groups distributed in 15 pens of 12 animals each. The initial average weight in the animals was 60 kg. All the animals were given the same food, but the sugar contents varied in each group. The food intake was recorded in kilograms during 30 days as shown in tables 3 to 5.

**Table 3.- Additive: sorbitol**

| Fattening pigs. Food intake (kg) versus sorbitol contents in food | | | | | | |
|---|---|---|---|---|---|---|
| | Sorbitol contents in pig food | | | | | |
| pen | 0.00% | 0.10% | 0.20% | 0.40% | 0.80% | 1.60% |
| 1 | 870 | 826 | 855 | 817 | 874 | 880 |
| 2 | 849 | 826 | 823 | 834 | 849 | 812 |
| 3 | 878 | 868 | 871 | 880 | 836 | 855 |
| 4 | 835 | 881 | 866 | 859 | 828 | 828 |

(continued)

| Fattening pigs. Food intake (kg) versus sorbitol contents in food | | | | | | |
|---|---|---|---|---|---|---|
| | Sorbitol contents in pig food | | | | | |
| pen | 0.00% | 0.10% | 0.20% | 0.40% | 0.80% | 1.60% |
| 5 | 819 | 832 | 874 | 824 | 866 | 860 |
| Total | 4251 | 4233 | 4289 | 4214 | 4253 | 4235 |

### Table 4.- Additive: lactose

| Fattening pigs. Food intake (kg) versus lactose contents in food | | | | | | |
|---|---|---|---|---|---|---|
| | Lactose contents in pig food | | | | | |
| pen | 0.00% | 0.10% | 0.20% | 0.40% | 0.80% | 1.60% |
| 1 | 889 | 845 | 844 | 844 | 851 | 877 |
| 2 | 858 | 823 | 866 | 815 | 834 | 860 |
| 3 | 832 | 835 | 876 | 846 | 820 | 816 |
| 4 | 876 | 876 | 838 | 878 | 889 | 880 |
| 5 | 824 | 839 | 827 | 822 | 821 | 823 |
| Total | 4279 | 4218 | 4251 | 4205 | 4215 | 4256 |

### Table 5.- Additive: glucose

| Fattening pigs. Food intake (kg) versus glucose contents in food | | | | | | |
|---|---|---|---|---|---|---|
| | Glucose contents in pig food | | | | | |
| pen | 0.00% | 0.10% | 0.20% | 0.40% | 0.80% | 1.60% |
| 1 | 867 | 872 | 845 | 840 | 831 | 875 |
| 2 | 845 | 854 | 872 | 836 | 825 | 847 |
| 3 | 883 | 868 | 830 | 876 | 838 | 832 |
| 4 | 834 | 824 | 821 | 862 | 884 | 842 |
| 5 | 838 | 817 | 842 | 874 | 874 | 811 |
| Total | 4267 | 4235 | 4210 | 4288 | 4252 | 4207 |

Hence, there is no significant increase in the pig's feeding habits in the presence of these sugars, no matter the sugar concentration. Very similar results are also obtained with the rest of sugars but xylitol.

Reference example 2

Reference example 2 shows food intake trials, in which pigs have the choice between plain feed, feed containing 0.25% sorbitol, feed containing 0.25% sucrose and feed containing 0.25% xylitol. The results are shown in Table 6.

Table 6 - Comparison between different pig food compositions

| Pen | Plain food ( monthly intake ) | Pen | Food containing 0.25% Sorbitol (monthly intake ) | Pen | Food containing 0.25% Sucrose (monthly intake ) | Pen | Food containing Xylitol 0.25% (monthly intake) |
|---|---|---|---|---|---|---|---|
| 1 | 826 | 6 | 812 | 11 | 835 | 16 | 919 |

(continued)

| Pen | Plain food ( monthly intake ) | Pen | Food containing 0.25% Sorbitol (monthly intake ) | Pen | Food containing 0.25% Sucrose (monthly intake ) | Pen | Food containing Xylitol 0.25% (monthly intake) |
|---|---|---|---|---|---|---|---|
| 2 | 867 | 7 | 884 | 12 | 802 | 17 | 934 |
| 3 | 840 | 8 | 825 | 13 | 856 | 18 | 922 |
| 4 | 887 | 9 | 842 | 14 | 819 | 19 | 915 |
| 5 | 803 | 10 | 828 | 15 | 873 | 15 | 970 |
| Total | 4223 | Total | 4191 | Total | 4185 | Total | 4660 |

Table 6 shows the results on feed intake of different pig food compositions, wherein reference plain food without any additive has been compared with food to which 0.25% sorbitol, 0.25% sucrose and 0.25% xylitol has been added, respectively. The results of the food containing sorbitol or sucrose show almost no difference with respect to the reference plain food meaning that addition of sorbitol or sucrose to pig food does not show any effect. However, the addition of xylitol yields a considerable increase of about 14% in the food intake. This effect has not been observed with any other additive.

**Example 6**

Example 6 is another field test that was conducted on a mix of 400 male and female weaning pigs, in the age of 21 days, distributed in 8 pens with 50 animals each. The weaning pigs in pens 1 to 4 were fed with plain water and pre-starter food, and the weaning pigs in pens 5 to 8 were fed with water and pre-starter food containing both 0.35% xylitol. The results when the animals reached the age of 42 days were that:

the joint pigs in pens 1 to 4 showed a total body weight increase of 755.5 kg.
the joint pigs in pens 5 to 8 showed a total body weight increase of 843.0 kg.

That is, after three weeks feeding, the weaning pigs fed with pre-starter food containing 0.35% xylitol attained a total body weight increase that was 13.4% greater than the body weight increase achieved in weaning pigs fed in the same conditions but without xylitol. The results are shown in the following Tables 7 and 8.

Table 7 - Weaning pigs fed with plain water and pre-starter food.

| Pen | Initial total body weight | Final total body weight | Body weight increase | Body weight increase % |
|---|---|---|---|---|
| 1 | 271.0 | 465.5 | 194.5 | |
| 2 | 256.0 | 438.0 | 182.0 | |
| 3 | 268.5 | 460.5 | 192.0 | |
| 4 | 263.0 | 450.0 | 187.0 | |
| Total | 1,058.5 | 1,814.0 | 755.5 | 71.4 |
| Average/animal | 5.29 | 9.07 | 3.78 | |

Table 8 - Weaning pigs fed with water and pre-starter food containing 0.35% xylitol.

| Pen | Initial total body weight | Final total body weight | Body weight increase | Body weight increase % |
|---|---|---|---|---|
| 5 | 266.5 | 474.0 | 207.5 | |
| 6 | 254.0 | 465.0 | 211.0 | |
| 7 | 259.5 | 469.0 | 209.5 | |

(continued)

| Pen | Initial total body weight | Final total body weight | Body weight increase | Body weight increase % |
|---|---|---|---|---|
| 8 | 260.5 | 475.5 | 215.0 | |
| Total | 1,040.5 | 1,883.5 | 843.0 | 81.0 |
| Average/animal | 5.20 | 9.42 | 4.22 | |

**Claims**

1. Use of xylitol in the food of weaning pigs for increasing their rate of body weight growth, wherein xylitol is used in an amount of 0.01 to 4% by weight based on the total weight of the food.

2. Use of xylitol in accordance with claim 1, wherein the xylitol is used during the pig's life span of 5 to 84 days of life.

3. Use of xylitol in accordance with claim 2, wherein the xylitol is used during the pig's life span of 20 to 84 days of life.

4. Use of xylitol in accordance with claim 2 and/or 3, wherein the use of xylitol shortens the transition phase from mother's milk to fattening feed by at least 2%.

5. Use of xylitol in accordance with claim 2, wherein the rate of body weight growth is increased by at least 2%.

6. Use of xylitol in accordance with claim 2, wherein the food is selected from the group comprising lactoinitiator, pre-starter, starter, water and combinations thereof.

7. Use of xylitol in accordance with claim 6, wherein the food is solid pre-starter food and/or water

8. Use of xylitol in accordance with claim 2 for increasing the rate of body weight growth in weaning pigs and adult pigs.

9. Use of xylitol in accordance with claim 2, wherein xylitol is used only during the transition phase of weaning pigs from mother's milk to fattening feed.

10. Use of xylitol in accordance with claim 2, wherein xylitol in the food of weaning pigs is used in an amount of 0.01 to 1 % by weight based on the total weight of the food.

11. Use of xylitol in accordance with claim 10, wherein xylitol is used in the range of 0.25 to 0.35% by weight based on the total weight of food.

12. Use of xylitol in accordance with claim 2, wherein the food contains a further additive selected from natural sweeteners or their corresponding synthetic ones, natural flavourings and essential oils, dyes, carotenoids and xanthophylls, anticaking agents, emulsifiers, thickening agents or jelling agents, preserving agents, acidifiers, enzymes and preparations thereof, vitamins and provitamins, substances having effects similar to vitamins, oligoelements, chelates, amino acids as well as salts and analogues thereof, urea and its derivatives, digestion enhancers, stabilizers of the intestinal flora, and combinations thereof.

**FIG. 1**

**FIG. 2**

**FIG. 3**

|  | During lactation | Transition | Fattening |
|---|---|---|---|
| Plain food | 5,6 kg | 18,6 kg | 100 kg |
|  | 27 days | 77 days | 176 days |
| Food with xylitol | 5,6 kg | 18,6 kg | 100 kg |
|  | 27 days | 72 days | 164 days |

**FIG. 4**

Europäisches
Patentamt

European
Patent Office

Office européen
des brevets

## EUROPEAN SEARCH REPORT

Application Number

EP 14 15 7862

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MAKINEN K K ET AL: "THE CHEMICAL COMPOSITION OF SOW MILK DURING POLYOL FEEDING", NUTRITION REPORTS INTERNATIONAL, vol. 23, no. 5, 1981, pages 793-798, XP008125602, ISSN: 0029-6635 * page 793, paragraph 1 * * page 794, paragraph 4 * * page 796, paragraph 6 - page 797, paragraph 2 * | 1-12 | INV. A23K1/16 A23K1/18 A23L1/09 A23L1/236 |
| X | EP 0 130 746 A2 (BP NUTRITION [GB]) 9 January 1985 (1985-01-09) * page 1, lines 1-15; claims 1-4 * * page 3, lines 12-20 * | 1-12 | |
| X | WO 98/20748 A1 (MURTO ARMI [FI]; WIKMAN CHARLOTTE [FI]; MURTO MARIA [FI]) 22 May 1998 (1998-05-22) * page 4, lines 8-9; claims 1,5,10; examples 1,2 * | 1-12 | |
| X | WO 2009/006475 A1 (NOVUS INTERNAT INC [US]; NAVARRO FELIPE [US]; HARRELL ROBERT JOHN [US]) 8 January 2009 (2009-01-08) * paragraphs [0042], [0055], [0082]; claim 21 * | 1-12 | |

| TECHNICAL FIELDS SEARCHED (IPC) |
|---|
| A23K A23L |

-/--

The present search report has been drawn up for all claims

| Place of search | Date of completion of the search | Examiner |
|---|---|---|
| The Hague | 3 July 2014 | Tallgren, Antti |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 14 15 7862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HELLEKANT G ET AL: "Taste in domestic pig, Sus scrofa", JOURNAL OF ANIMAL PHYSIOLOGY AND ANIMAL NUTRITION, vol. 82, no. 1, September 1999 (1999-09), pages 8-24, XP002596499, ISSN: 0931-2439 | 1-12 | |
| Y | * page 8, paragraph 1 * <br> * page 11, paragraph 10; figure 1 * <br> * page 18, paragraph 2 * <br> * page 22, paragraphs 1,3-5 * <br> * page 9, paragraph 3 * <br> ----- | 1-12 | |
| X | NÄSI M ET AL: "Polyol mixture supplementation in the diet of breeding sows and piglets", JOURNAL OF AGRICULTURAL SCIENCE IN FINLAND = MAATALOUSTIETEELLINEN AIKAKAUSKIRJA, SEURA, HELSINKI, FINLAND, vol. 52, no. 1, 1 January 1980 (1980-01-01), pages 50-58, XP008169733, ISSN: 0024-8835 <br> * page 50, paragraph 1 - page 52, paragraph 2; table 1 * <br> ----- | 1-12 | |
| X | EP 2 343 089 A1 (JAER S A LAB [ES]) 13 July 2011 (2011-07-13) <br> * paragraphs [0001], [0017] - [0025], [0032] - [0046] * <br> ----- | 1-12 | TECHNICAL FIELDS SEARCHED (IPC) |
| Y | US 2004/142065 A1 (DE RODAS BRENDA [US] ET AL) 22 July 2004 (2004-07-22) <br> * claims 1,2,9,20,24; examples 1,2 * <br> ----- | 1-12 | |

-/--

The present search report has been drawn up for all claims

| Place of search | Date of completion of the search | Examiner |
|---|---|---|
| The Hague | 3 July 2014 | Tallgren, Antti |

EPO FORM 1503 03.82 (P04C01)

EUROPEAN SEARCH REPORT

Application Number

EP 14 15 7862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LAITAT M ET AL: "Factors influencing the feed ingestion and zootechnic performance of weaned pigs: perception and characteristics of diets", ANNALES DE MEDICINE VETERINAIRE, FACULTE DE MEDECINE VETERINAIRE, LIEGE, BE , vol. 148, no. 1 1 January 2004 (2004-01-01), pages 15-29, XP008169730, ISSN: 0003-4118 Retrieved from the Internet: URL:http://www.facmv.ulg.ac.be/amv/article s/2004_148_1_02.pdf * page 15, paragraph 1; table 1 * * page 19, columns 2,3 * | 1-12 | |
| X | WO 2011/055160 A1 (JAER S A LAB [ES]; MILAN MESA MANUEL [ES]; MARTI SANROMA GABRIEL [ES];) 12 May 2011 (2011-05-12) * claims 1-7; examples 1-5 * | 1-12 | |
| A | NÄSI M ET AL: "The effects of sugar alcohols on metabolism of growing pigs", ACTA VETERINARIA SCANDINAVICA, ACTA VETERINARIA SCANDINAVICA, KOPENHAGEN, DK, vol. 22, no. 3-4, 1 January 1981 (1981-01-01), pages 344-354, XP008125811, ISSN: 0044-605X * page 344, paragraph 1 - page 345, paragraph 4 * | 1-12 | TECHNICAL FIELDS SEARCHED (IPC) |

-/--

The present search report has been drawn up for all claims

| Place of search | Date of completion of the search | Examiner |
|---|---|---|
| The Hague | 3 July 2014 | Tallgren, Antti |

**EUROPEAN SEARCH REPORT**

Application Number

EP 14 15 7862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2005/063184 A1 (IMREX INC [CA]; ROMANOWSKI RADEK [CA]; EMILY PETER [US]; ALKEMADE STAN) 14 July 2005 (2005-07-14) * page 1, lines 33-39; claims 1,10,15,16; example 4 * * page 12, lines 1-24 * | 1-12 | |
| A | WO 91/09536 A1 (SVENSKA LANTMAENNENS [SE]) 11 July 1991 (1991-07-11) * page 2, paragraph 3; claims 1,4 * | 1-12 | |

TECHNICAL FIELDS
SEARCHED       (IPC)

The present search report has been drawn up for all claims

| Place of search | Date of completion of the search | Examiner |
|---|---|---|
| The Hague | 3 July 2014 | Tallgren, Antti |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................
& : member of the same patent family, corresponding
    document

EPO FORM 1503 03.82 (P04C01)

## EP 2 774 489 A1

**ANNEX TO THE EUROPEAN SEARCH REPORT
ON EUROPEAN PATENT APPLICATION NO.**          EP 14 15 7862

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2014

| Patent document cited in search report | | Publication date | Patent family member(s) | | Publication date |
|---|---|---|---|---|---|
| EP 0130746 | A2 | 09-01-1985 | EP | 0130746 A2 | 09-01-1985 |
| | | | US | 4598097 A | 01-07-1986 |
| WO 9820748 | A1 | 22-05-1998 | AU | 5052798 A | 03-06-1998 |
| | | | CA | 2271259 A1 | 22-05-1998 |
| | | | EP | 0987956 A1 | 29-03-2000 |
| | | | FI | 962811 A | 14-05-1998 |
| | | | NO | 992262 A | 24-06-1999 |
| | | | US | 6224917 B1 | 01-05-2001 |
| | | | WO | 9820748 A1 | 22-05-1998 |
| WO 2009006475 | A1 | 08-01-2009 | CN | 101790305 A | 28-07-2010 |
| | | | EP | 2161986 A1 | 17-03-2010 |
| | | | US | 2011008388 A1 | 13-01-2011 |
| | | | WO | 2009006475 A1 | 08-01-2009 |
| EP 2343089 | A1 | 13-07-2011 | EP | 2343089 A1 | 13-07-2011 |
| | | | WO | 2010034853 A1 | 01-04-2010 |
| US 2004142065 | A1 | 22-07-2004 | CA | 2513674 A1 | 12-08-2004 |
| | | | MX | PA05007770 A | 30-09-2005 |
| | | | US | 2004142065 A1 | 22-07-2004 |
| | | | US | 2014051769 A1 | 20-02-2014 |
| | | | WO | 2004066862 A2 | 12-08-2004 |
| WO 2011055160 | A1 | 12-05-2011 | EP | 2496093 A1 | 12-09-2012 |
| | | | WO | 2011055160 A1 | 12-05-2011 |
| WO 2005063184 | A1 | 14-07-2005 | AU | 2004308360 A1 | 14-07-2005 |
| | | | EP | 1701691 A1 | 20-09-2006 |
| | | | US | 2005158252 A1 | 21-07-2005 |
| | | | US | 2009311197 A1 | 17-12-2009 |
| | | | WO | 2005063184 A1 | 14-07-2005 |
| WO 9109536 | A1 | 11-07-1991 | AT | 127322 T | 15-09-1995 |
| | | | AU | 7068391 A | 24-07-1991 |
| | | | CA | 2073166 A1 | 05-07-1991 |
| | | | CS | 9100005 A2 | 15-09-1991 |
| | | | DE | 69112814 D1 | 12-10-1995 |
| | | | DE | 69112814 T2 | 22-02-1996 |
| | | | DK | 0509027 T3 | 15-01-1996 |
| | | | EP | 0509027 A1 | 21-10-1992 |
| | | | ES | 2078504 T3 | 16-12-1995 |
| | | | FI | 923100 A | 03-07-1992 |
| | | | HU | 218295 B | 28-07-2000 |
| | | | JP | 3071460 B2 | 31-07-2000 |

EPO FORM P0459

For more details about this annex : see Official Journal of the European Patent Office, No. 12/82

20

**ANNEX TO THE EUROPEAN SEARCH REPORT
ON EUROPEAN PATENT APPLICATION NO.**

EP 14 15 7862

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2014

| Patent document cited in search report | Publication date | Patent family member(s) | | Publication date |
|---|---|---|---|---|
| | | JP | H05505519 A | 19-08-1993 |
| | | MX | 174258 B | 02-05-1994 |
| | | NO | 922618 A | 21-08-1992 |
| | | SE | 466331 B | 03-02-1992 |
| | | SK | 280726 B6 | 11-07-2000 |
| | | US | 5296243 A | 22-03-1994 |
| | | WO | 9109536 A1 | 11-07-1991 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Analyses of pig genomes provide insight into porcine demography and evolution. *Nature,* 15 November 2012, vol. 491, 393-398
- **D. V. RAYNER.** Gastrointestinal satiety in animals other than man. *Proceedings of the Nutrition society,* 1992, vol. 51, 1-6
- **GLASER et al.** Gustatory responses of pigs to various natural and artificial compounds known to be sweet in man. *Food Chemistry,* 2000, vol. 68, 375-385